# EUROPEAN PATENT APPLICATION

(11) **EP 4 366 011 A2**
(43) Date of publication of application: **08.05.2024**
(21) Application number: 23206860.1
(22) Date of filing: 30.10.2023
(51) Int. Cl.: H01M 10/04, H01M 10/0587, H01M 10/42, H01M 50/107

(54) **SECONDARY BATTERY**

(30) Priority: 03.11.2022 KR 20220145045
(71) Applicant: Samsung SDI Co., Ltd., Yongin-si, Gyeonggi-do 17084 (KR)
(72) Inventor: SUNG, Geon Kyu, 17084 Yongin-si (KR); KIM, Dae Kyu, 17084 Yongin-si (KR); LEE, Ho Jae, 17084 Yongin-si (KR); AN, Dong Jin, 17084 Yongin-si (KR); LIM, Byoung Hwi, 17084 Yongin-si (KR)
(74) Representative: Marks & Clerk LLP

(57) **Abstract**

A secondary battery includes a cylindrical case; an electrode assembly accommodated in the case and including a first electrode plate, a second electrode plate, and a separator, the electrode assembly being wound such that the first electrode plate is arranged at an outermost side and is in contact with the case; a cap assembly coupled to the case and electrically connected to the second electrode plate; and a first swelling tape attached to an inner surface of the first electrode plate in a state in which the electrode assembly is wound, the first swelling tape having a multi-layer structure. The swelling tape may be applied to a base material finishing portion of the electrode assembly to improve quality distribution of the base material finishing structure due to long-diameter distribution. In addition, a swelling effect may be improved through the multi-layer swelling tape.

## Description

### BACKGROUND

### 1. Field

Aspects of embodiments of the present disclosure relate to a secondary battery.

### 2. Description of the Related Art

In general, a cylindrical secondary battery includes a cylindrical electrode assembly, a cylindrical can, or case, accommodating the electrode assembly and an electrolyte, and a cap assembly coupled to an upper opening of the can to seal the can and allowing current generated in the electrode assembly to flow to an external device. The electrode assembly is wound in a cylindrical shape by combining a negative electrode plate, a separator, and a positive electrode plate, and, then, a finishing tape is attached to maintain the wound state.

Recently, development of high-output and high-capacity batteries has increased according to customer needs. As an option for the high output and high capacity, methods for increasing a size of the electrode assembly in an inner space of the cylindrical can are desirable.

The above-described information disclosed in the technology that serves as the background of the present disclosure is provided for improving understanding of the background of the present disclosure and, thus, may include information that does not constitute the related art.

### SUMMARY

According to an aspect of embodiments of the present disclosure, a secondary battery having an improved finish structure of an electrode assembly is provided. According to another aspect of embodiments of the present disclosure, a secondary battery capable of increasing a size of an electrode assembly is provided.

According to another aspect of embodiments of the present disclosure, a secondary battery is provided in which contact between an electrode assembly and a can of a base material finishing structure is improved, and quality distribution of the base material finishing structure is improved.

According to one or more embodiments, a secondary battery includes: a cylindrical case; an electrode assembly accommodated in the case and comprising a first electrode plate, a second electrode plate, and a separator between the first electrode plate and the second electrode plate, the electrode assembly being wound such that the first electrode plate is arranged at an outermost side and is in contact with the case; a cap assembly coupled to the case and electrically connected to the second electrode plate; and a first swelling tape attached to an inner surface of the first electrode plate in a state in which the electrode assembly is wound, the first swelling tape having a multi-layer structure.

The first electrode plate may be a negative electrode plate, and the second electrode plate may be a positive electrode plate.

The first swelling tape may be attached to be spaced apart from a winding end of the first electrode plate.

The first swelling tape may include: a first adhesive layer; a second adhesive layer; and a plurality of layers between the first adhesive layer and the second adhesive layer.

The plurality of layers may include at least one swelling layer between the first adhesive layer and the second adhesive layer.

The at least one swelling layer may be swelled (e.g. may be configured to swell) by absorbing an electrolyte.

The secondary battery may further include a second swelling tape attached to be spaced apart from the first swelling tape.

The second swelling tape may have a same structure as the first swelling tape.

The second swelling tape may be attached to a surface opposite to the inner surface to which the first swelling tape is attached.

At least some of the above and other features of the invention are set out in the claims.

### BRIEF DESCRIPTION OF THE DRAWINGS

The accompanying drawings are included to provide a further understanding of the present disclosure, and are incorporated in and constitute a part of this specification. The drawings illustrate some example embodiments of the present disclosure and, together with the description, serve to explain principles of the present disclosure. In the drawings:
FIG. 1 illustrates a perspective view of a secondary battery according to one or more embodiments;
FIG. 2 illustrates a perspective view of an electrode assembly of FIG. 1;
FIG. 3 illustrates a view of a finishing structure of the electrode assembly of FIG. 2;
FIG. 4 illustrates a view comparing states before and after changing the finishing structure of FIG. 3;
FIG. 5 illustrates a cross-sectional view of a state in which a winding end of the electrode assembly of FIG. 3 is unfolded;
FIG. 6 illustrates a plan view of the finishing structure according to one or more embodiments; and
FIG. 7 illustrates a plan view of a finishing structure according to one or more embodiments.

### DETAILED DESCRIPTION

While some embodiments of the present disclosure are described herein, embodiments of the present disclosure may, however, be embodied in many different forms and should not be construed as being limited to the embodiments set forth herein; rather, these embodiments are provided so that those skilled in the art thoroughly understand the present disclosure. Rather, these embodiments are provided so that this disclosure will be thorough and complete, and will fully convey the scope of the present disclosure to those skilled in the art.

In addition, in the following drawings, the thickness or size of each layer may be exaggerated for convenience and clarity of description, and the same reference numerals in the drawings refer to the same elements. As used herein, the term "and/or" includes any and all combinations of one or more of the associated listed items. In this specification, it is also to be understood that if a member A is referred to as being connected to a member B, the member A may be directly connected to the member B or indirectly connected to the member B with one or more members therebetween.

The terms used in this specification are for illustrative purposes of the present disclosure and should not be construed to limit the meaning or the scope of the present disclosure. As used in this specification, a singular form may, unless definitely indicating a particular case in terms of the context, include a plural form. Also, the expressions "comprise/include" and/or "comprising/including" used in this specification neither define the mentioned shapes, numbers, steps, operations, members, elements, and/or groups of these, nor exclude the presence or addition of one or more other different shapes, numbers, steps, operations, members, elements, and/or groups of these, or addition of these. The term "and/or" used herein includes any and all combinations of one or more of the associated listed items.

As used herein, terms such as "first," "second," etc. are used to describe various members, components, areas, layers, and/or portions. However, it is to be understood that the members, components, areas, layers, and/or portions should not be defined by these terms. The terms do not mean a particular order, up and down, or superiority, and are used for distinguishing one member, component, area, layer, or portion from another member, component, area, layer, or portion. Thus, a first member, component, area, layer, or portion which will be described may also refer to a second member, component, area, layer, or portion, without departing from the teaching of the present disclosure.

Spatially relative terms, such as "below," "beneath," "lower," "above," "upper," and the like, may be used herein for ease of description to describe one element or feature's relationship to another element(s) or feature(s) referring to the figures. These spatially relative terms are intended for ease of comprehension of the present invention according to various process states or usage states of the present invention, and, thus, the present disclosure is not limited thereto. For example, if an element or feature shown in the drawings is turned, the element or feature described as "beneath" or "below" may instead be "above" or "upper." Thus, the term "lower" may encompass the term "upper" or "below."

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

Herein, a secondary battery according to some embodiments of the present disclosure will be described in further detail with reference to the accompanying drawings.

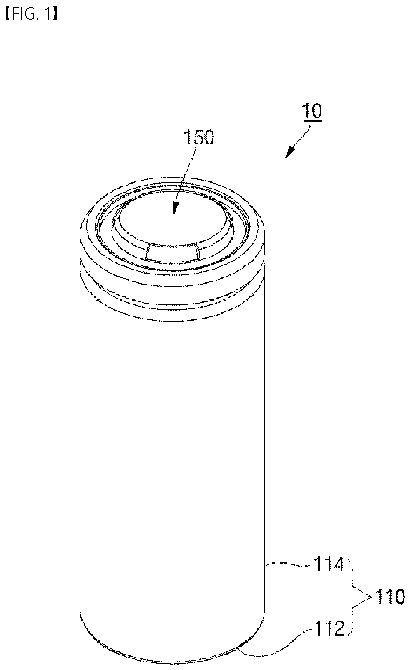

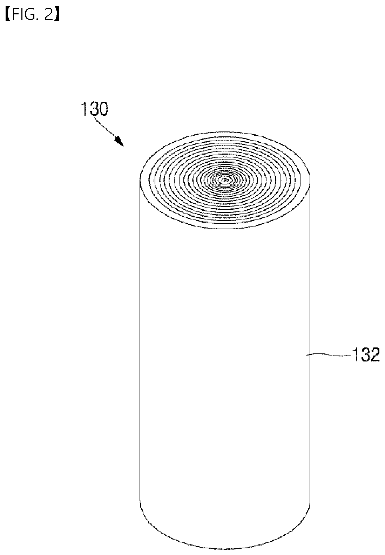

FIG. 1 illustrates a perspective view of a secondary battery according to one or more embodiments; and FIG. 2 illustrates a perspective view of an electrode assembly of FIG. 1.

Referring to FIG. 1, a cylindrical secondary battery 10 includes a cylindrical can, or case, 110, and a cap assembly 150 coupled to the can 110. The electrode assembly 130 of FIG. 2 may be accommodated inside the can 110 together with an electrolyte.

The can 110 may include a circular bottom portion 112 and a cylindrical side portion 114 extending from the bottom portion 112. The cap assembly 150 may be coupled to an end of the side portion 114 facing the bottom portion 112 to close an open portion of the side portion 114. In an embodiment, the can 110 may be made of steel, a steel alloy, nickel-plated steel, nickel-plated steel alloy, aluminium, an aluminium alloy, or an equivalent thereof, but the material thereof is not limited thereto. The can 110 may be electrically connected to the electrode assembly 130 and insulated from the cap assembly 150.

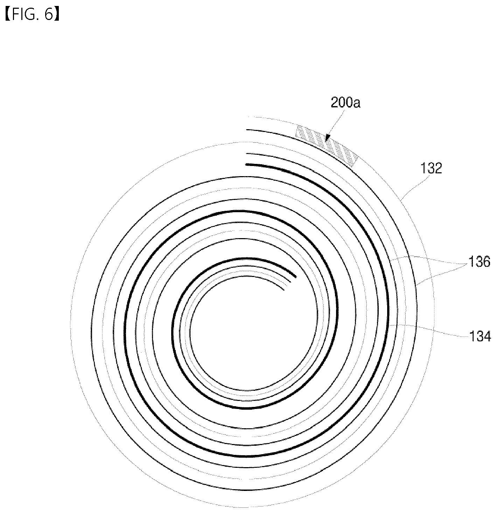

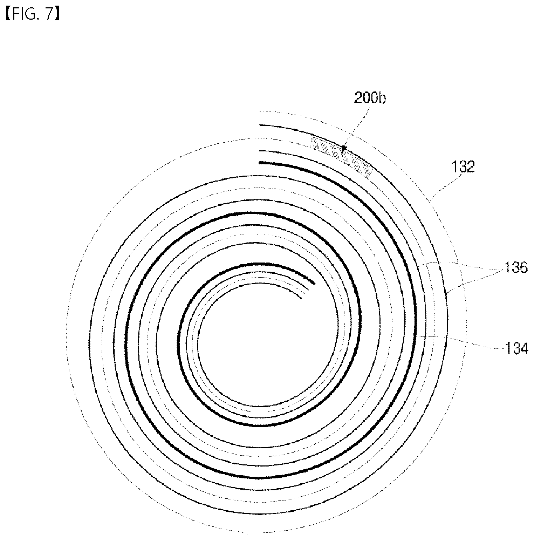

Referring to FIG. 2, the electrode assembly 130 includes a first electrode plate 132, a second electrode plate (see reference numeral 134 of FIGS. 6 and 7) and a separator (see reference numeral 136 of FIGS. 6 and 7). The electrode assembly 130 may be wound such that the first electrode plate 132 faces the outside after the first electrode plate 132, the separator, and the second electrode plate are sequentially stacked and combined. A swelling tape 200 may be attached to an inside of the winding end.

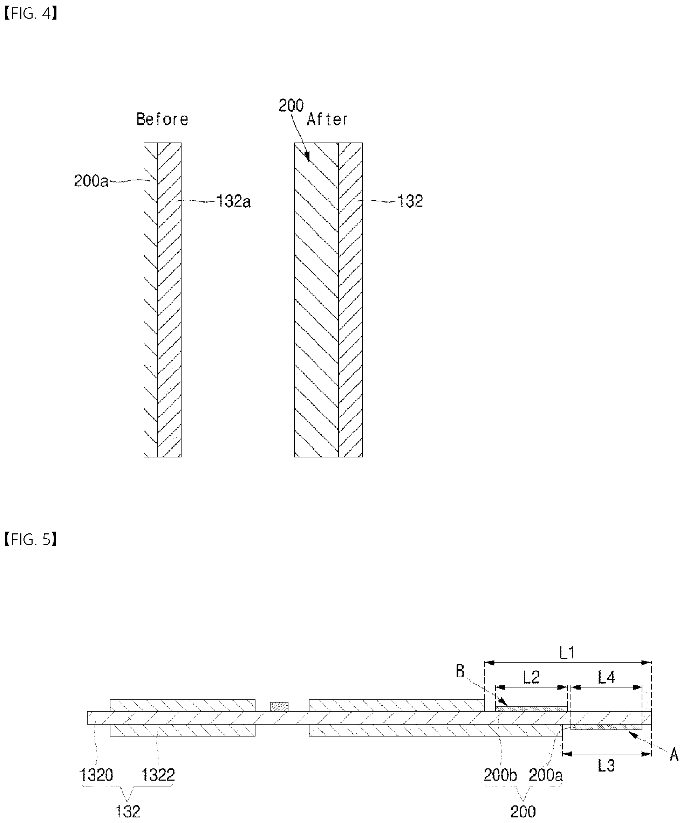

In an embodiment, the first electrode plate 132 may be a negative electrode plate on which a negative electrode active material layer (e.g., graphite, carbon, etc.) (see reference numeral 1322 of FIG. 5) is disposed on each of both, or opposite, surfaces of a copper (Cu) or nickel (Ni) foil (see reference numeral 1320 of FIG. 5). In an embodiment, the first electrode plate 132 may be disposed around (e.g., to surround) an outermost side of the electrode assembly 130. In some embodiments, the first electrode plate 132 may be in contact with an inner circumferential surface of the can 110 such that the wound electrode assembly 130 is electrically connected to the can 110. In some embodiments, the first electrode plate 132 may function as an electrode tab. In an embodiment, this structure may be defined as a "base material finishing structure" for convenience. In some embodiments, there is no separate electrode tab connecting the first electrode plate 132 to the can 110, and the first electrode plate 132 may serve as a "base material tab." Due to this structure, the can 110 may become a negative electrode having a same polarity as the first electrode plate 132. Therefore, the negative electrode tab may be removed, and the first electrode plate 132 that is the negative electrode plate may serve as the tab to increase a size of the electrode assembly by the increased space.

In an embodiment, the second electrode plate 134 may be a positive electrode plate on which a positive electrode active material layer (e.g., a transition metal oxide, such as LiCoO₂, LiNiO₂, LiMn₂O₄, etc.) is disposed on each of both, or opposite, surfaces of an aluminium foil. A non-coating portion that is not provided with the positive electrode active material layer may be disposed on a portion of the second electrode plate 134. For example, the non-coating portion may be disposed upward with respect to FIG. 1 and electrically connected to the cap assembly 150 by a structure such as a separate positive electrode tab or a collector plate. In an embodiment, the second electrode plate 134 is electrically connected to the cap assembly 150, such that the cap assembly 150 may become a positive electrode having a same polarity as the second electrode plate 134.

The separator 136 may be disposed between the first electrode plate 132 and the second electrode plate 134 to prevent or substantially prevent a short circuit from occurring and allow only lithium ions to move. The separator 136 may be made of polyethylene (PE) or polypropylene (PP), but embodiments of the present embodiment are not limited thereto.

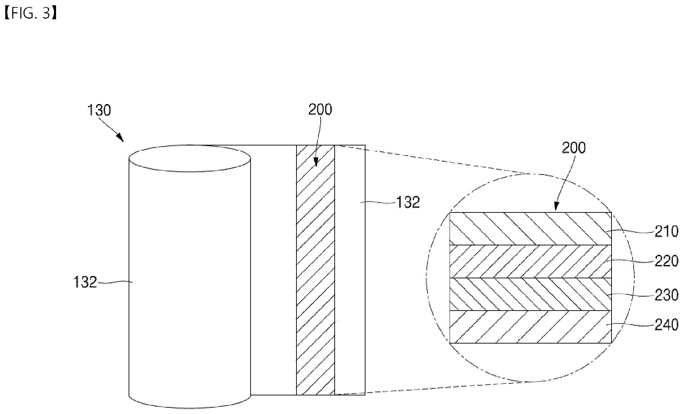

FIG. 3 illustrates a view of the finishing structure of the electrode assembly of FIG. 2. FIG. 4 illustrates a view comparing states before and after changing the finishing structure of FIG. 3. FIG. 5 illustrates a cross-sectional view of a state in which the winding end of the electrode assembly of FIG. 3 is unfolded.

Referring to FIG. 3, the swelling tape 200 may be attached to an inner surface of the first electrode plate 132 that is not exposed to the outside after the electrode assembly 130 is wound, or in a wound state of the electrode assembly 130. In some embodiments, the swelling tape 200 may be attached to an end of the first electrode plate 132 in the winding direction in a state of being spaced apart by a distance (e.g., a predetermined distance). Also, referring to FIG. 4, a width of the swelling tape 200 may increase compared to that of a finishing tape 200a attached to a conventional first electrode plate 132a before improvement.

FIG. 5 illustrates a state in which the inner surface of the first electrode plate 132 faces a lower side. In some embodiments, the attachment position of the swelling tape 200 illustrated in FIG. 3 becomes a lower part in FIG. 5. In some embodiments, the swelling tape 200 may be attached to the non-coating portion of the first electrode plate 132 on which the negative active material layer 1322 is not provided. In some embodiments, the swelling tape 200 may be attached to either a position A that is on the inner surface of the first electrode plate 132 or a position B that is on an outer surface of the first electrode plate 132, or may be attached to the two positions. The position A may be an attachment position in FIG. 6 to be described later, and the position B may be an attachment position in FIG. 7 to be described later. In some embodiments, each of respective widths L2 and L4 of the swelling tapes 200b and 200a may be less than each of respective widths L1 and L3 of the non-coating portion of the first electrode plate 132. In some embodiments, each of the widths L2 and L4 of the swelling tapes 200b and 200a may be provided at a ratio of about 10% to about 100% based on each of the respective widths L1 and L3 of the non-coating portion of the first electrode plate 132. Even if the widths L2 and L4 of the swelling tapes 200b and 200a are provided at the ratio of about 100% to the widths L1 and L3 of the non-coating portion of the first electrode plate 132, the swelling tapes 200a and 200b may not be exposed to the outside of the winding end of the first electrode plate 132. In some embodiments, the swelling tapes 200a and 200b may be attached to the outer surface of the first electrode plate 132 as well as the inner surface. In the position at which the swelling tape 200a is attached, a position of the inner surface spaced apart from the winding end of the first electrode plate 132 may be defined as a first position (position A described above). In the position at which the swelling tape 200b is attached, a position of the outer surface of the first electrode plate 132, which is spaced apart from the first position A and is opposite to the first position A, may be defined as the second position (position B described above). However, even if the swelling tape 200 is attached to the second position B, if the electrode assembly 130 is wound, the swelling tape 200 may be covered by the non-coating portion of the first electrode plate 132 so as not to be exposed to the outside of the electrode assembly 130. However, in FIG. 5, for convenience, a distance between the swelling tapes 200 attached to the first position A and the second position B is exaggerated to be adjacent to each other for comparison between the first position A and the second position B, and the present embodiment is not limited to the illustrated positions.

Referring again to FIG. 3, in an embodiment, the swelling tape 200 may have a multi-layer structure based on a longitudinal section (herein, it will be described in a direction downward from an upper side with reference to FIG. 3). The swelling tape 200 may include a first adhesive layer 210, a first swelling layer 220 under the first adhesive layer 210, a second swelling layer 230 under the first swelling layer 220, and a second adhesive layer 240 under the second swelling layer 230.

The first adhesive layer 210 may be attached to the first or second position of the first electrode plate 132, and the second adhesive layer 240 may be attached to a corresponding portion if the electrode assembly 130 is wound. That is, no matter where the swelling tape 200 is attached, the swelling tape 200 may not be visible from the outside of the electrode assembly 130 referring to FIGS. 6 and 7.

The first swelling layer 220 and the second swelling layer 230 may be swelled by absorbing the electrolyte such that the can 110 and the first electrode plate 132 are in contact with each other, and, also, the contact state between the can 110 and the first electrode plate 132 is maintained. In some embodiments, the first swelling layer 220 may also prevent or substantially prevent the electrode assembly 130 from moving. In some embodiments, the first swelling layer 220 and the second swelling layer 230 may include any material capable of absorbing the electrolyte so as to be swelled. For example, the first swelling layer 220 and the second swelling layer 230 may be selected from PET, PI, oriented polystyrene (OPS), thermoplastic polyurethane (TPU), polyvinylidene fluoride (PVdF), an acrylic binder, or a rubber-based material. In some embodiments, the first swelling layer 220 and the second swelling layer 230 may be provided as layers made of different materials among the materials capable of being swelled by the electrolyte. Because the first swelling layer 220 and the second swelling layer 230 are swelled by the electrolyte, even if there is long-diameter distribution if the electrode assembly 130 is wound, the state, in which the outermost side of the electrode assembly 130 is in contact with the can 110, may be maintained.

As described above, the swelling tape 200 having the multi-layer structure may be provided to improve the swelling effect compared to a finishing tape made of only a simple adhesive layer, thereby improving the contact with the can 110.

FIG. 6 illustrates a plan view of the finishing structure according to one or more embodiments. FIG. 7 illustrates a plan view of a finishing structure according to one or more embodiments. FIGS. 6 and 7 illustrate examples of the attachment position of the swelling tape 200 in the state in which the electrode assembly 130 is wound.

Referring to FIG. 6, the first swelling tape 200a may be attached to an inner surface (lower surface in FIG. 5) spaced by a distance (e.g., a predetermined distance) from the winding end of the first electrode plate 132. As described above, this position may become the first position A. In one or more embodiments, referring to FIG. 7, the second swelling tape 200b may be attached to an outer surface (top surface in FIG. 5) that is spaced apart from the winding end of the first electrode plate 132. As described above, this position may become the second position B. If the winding of one time of the electrode assembly 130 is referred to as a turn, the second swelling tape 200b may be attached to a position at which one turn relative to the outermost side is performed. In embodiments, one of the aforementioned first swelling tape 200a and the second swelling tape 200b may be used, or both the first and second swelling tapes 200a and 220b may be used. In one or more embodiments, the second swelling tape 200b is not limited to its attachment position as long as the second swelling tape 200b is spaced apart from the first swelling tape 200a and is not exposed to the outside of the electrode assembly 130.

As described above, the swelling tape 200 may be applied to the base material finishing portion of the electrode assembly 130 to improve the quality distribution of the base material finishing structure due to the long-diameter distribution. In some embodiments, the swelling effect may be improved through the swelling tape 200 having the multi-layer structure.

According to embodiments of the present disclosure, the separate electrode tab may be removed, and the negative electrode base material may serve as the tab to increase a size of the electrode assembly by the increased space.

In addition, the swelling tape may be applied to the base material finishing portion of the electrode assembly to improve the quality distribution of the base material finishing structure due to the long-diameter distribution.

In addition, a swelling effect may be improved through the multi-layer swelling tape.

While some embodiments have been described herein, these are merely provided as example embodiments, and the present disclosure is not limited to the foregoing embodiments, and also it will be understood by those of ordinary skill in the art that various changes in form and details may be made therein without departing from the scope of the present disclosure as set forth by the following claims.

## Claims

1. A secondary battery comprising:
a cylindrical case;
an electrode assembly accommodated in the case and comprising a first electrode plate, a second electrode plate, and a separator between the first electrode plate and the second electrode plate, the electrode assembly being wound such that the first electrode plate is arranged at an outermost side and is in contact with the case;
a cap assembly coupled to the case and electrically connected to the second electrode plate; and
a first swelling tape attached to an inner surface of the first electrode plate in a state in which the electrode assembly is wound, the first swelling tape having a multi-layer structure.

2. The secondary battery as claimed in claim 1, wherein the first electrode plate is a negative electrode plate, and the second electrode plate is a positive electrode plate.

3. The secondary battery as claimed in claim 2, wherein the first swelling tape is attached to be spaced apart from a winding end of the first electrode plate.

4. The secondary battery as claimed in claim 3, wherein the first swelling tape comprises:
a first adhesive layer;
a second adhesive layer; and
a plurality of layers between the first adhesive layer and the second adhesive layer.

5. The secondary battery as claimed in claim 4, wherein the plurality of layers comprises at least one swelling layer between the first adhesive layer and the second adhesive layer.

6. The secondary battery as claimed in claim 5, wherein the at least one swelling layer is swelled by absorbing an electrolyte.

7. The secondary battery as claimed in claim 6, further comprising a second swelling tape attached to be spaced apart from the first swelling tape.

8. The secondary battery as claimed in claim 7, wherein the second swelling tape has a same structure as the first swelling tape.

9. The secondary battery as claimed in claim 8, wherein the second swelling tape is attached to a surface opposite to the inner surface to which the first swelling tape is attached.

10. The secondary battery as claimed in any one of claims 1 to 5, further comprising a second swelling tape attached to be spaced apart from the first swelling tape.

11. The secondary battery as claimed in claim 10, wherein the second swelling tape has a same structure as the first swelling tape.

12. The secondary battery as claimed in claim 11, wherein the second swelling tape is attached to a surface opposite to the inner surface to which the first swelling tape is attached.
